# EUROPÄISCHE PATENTSCHRIFT

(11) **EP 2 751 906 B1**
(45) Veröffentlichungstag und Bekanntmachung des Hinweises auf die Patenterteilung: **20.04.2022**
(21) Anmeldenummer: 12726571.8
(22) Anmeldetag: 16.02.2012
(51) Int. Cl.: H02K 3/47, H02K 41/03, H02K 23/32, H02K 21/14, H02K 21/22, H02K 3/32

(54) **ELEKTROMOTOR MIT EISENLOSER WICKLUNG**
ELECTRIC MOTOR WITH IRONLESS WINDING
MOTEUR ELECTRIQUE A ENROULEMENT SANS FER.

(30) Priorität: 29.08.2011 DE 102011111352
(43) Veröffentlichungstag der Anmeldung: 09.07.2014
(73) Patentinhaber: Patentverwertungsgesellschaft PaLiBa GmbH, 39179 Barleben (DE)
(72) Erfinder: KASPER, Roland, 39326 Samswegen (DE); HEINEMANN, Wolfgang, 39128 Magdeburg (DE); BORCHARDT, Norman, 06449 Giersleben (DE)
(74) Vertreter: Fischer, Volker
(86) Internationale Anmeldenummer: PCT/DE2012/000140
(87) Internationale Veröffentlichungsnummer: WO 2013/029579

(56) Entgegenhaltungen:
- GB-A- 2 455 113
- US-A- 4 924 125
- US-A1- 2010 117 367
- US-B1- 7 795 773

## Beschreibung

Die Erfindung betrifft einen Elektromotor mit eisenloser Wicklung mit fremd- oder permanent erregbaren magnetischen Polen.

Die Nutzung von Elektromotoren erfolgt in vielen Anwendungsbereichen mit zunehmend steigender Tendenz. Die elektromechanische Energiewandlung in einem solchen Motor erfolgt entweder permanenterregt mit Hilfe von Dauermagneten oder fremderregt mit Hilfe von zwei separaten Spulenanordnungen im Rotor und Stator, wie dieses beispielsweise aus DE 69 735 825 T2 bekannt ist. Während dieser Energiewandlung entstehen Verluste, die sich im Wesentlichen aus ohmschen Verlusten, Wirbelstromverlusten, Hystereseverlusten und Reibungsverlusten zusammensetzen.

Die Verwendung von hohen Windungszahlen ermöglicht hohe Leistungsabgaben, allerdings steigen damit auch die ohmschen Verluste. Je mehr Wicklungsmaterial verwendet wird, desto größer wird das Verhältnis von abgegebener mechanischer Leistung zur aufgenommenen elektrischeren Leistung (umgekehrt im Generatorbetrieb).

Der Aufbau der Wicklungen erfolgt im Allgemeinen durch einen aus Motoreisen bestehenden Stator, in dessen Nuten die einzelnen Wicklungsstränge verlegt werden oder um dessen Polschuhe die Wicklungsstränge gewickelt werden. Daneben sind aus DE 34 017 76 A1 und DE 44 145 27 C1 eisenlose Wicklungsaufbauten bekannt, welche z.B. in gehärtetes Kunstharz eingebettet oder in selbsttragender Bauweise ausgeführt werden.

Des Weiteren gibt es nutenlose Statorausführungen, wie sie beispielsweise aus DE 69 407 908 T2, DE 44 145 27 C1 und DE 69 735 825 T2 bekannt sind.

Die Anordnung der Wicklung im Luftspalt zwischen Rotor und Stator ist beispielweise aus DE 41 300 16 A1, DE 120 606 7B DE 340 177 6 A1, DE 44 145 27 C1, DE 69 735 825 T2 bekannt.

Die US 49 24 125 offenbart einen Elektromotor ähnlich dem des Anspruchs 1. Im Gegensatz zu Anspruch 1 offenbart die US 49 24 125 a) keinen Eisenrückschluss am Primärteil, b) dass nicht alle elektrischen Verbindungselemente bezüglich der jeweiligen Wicklungsstränge auf radial verschiedenen Ebenen angeordnet sind.

Da sich das magnetische Feld in den Wicklungen des Elektromotors zeitlich verändert, entstehen Wirbelstromverluste in Form von Wärme, die sich in den Eisenteilen des Motors niederschlagen. Die derzeitigen Elektromotoren verwenden zum Teil isolierte Blechpakte, um die Ausbreitung der Wirbelströme zu vermindern. Die Herstellung dieser geblechten Statoren ist relativ aufwendig und wird von unterschiedlichen Herstellern nur zum Teil angeboten. Des Weiteren werden zunehmend permanenterregte Elektromotoren hergestellt, die aber nicht für Asynchronmotoren in Frage kommen. Durch die Verwendung von Permanentmagneten, gelingt es, eine Wicklung zu ersetzen was zur Folge hat, dass ohmschen Verluste vermindert werden und die Leistungsausbeute erhöht wird.

Des Weiteren sind das absolute Motorgewicht, sowie die Motordimensionen, die beide durch die Form und Größe des Stators und Rotors sowie der Wicklungen bestimmt werden, für viele Anwendung, insbesondere auch für mobile Antriebsanwendungen von wesentlicher Bedeutung.

Vor diesem Hintergrund besteht die Aufgabe der vorliegenden Erfindung darin, einen Elektromotor zur Verfügung zu stellen, mit welchem die zuvor genannten technischen Probleme von Elektromotoren vermindert werden können.

Gelöst wird diese Aufgabe durch einen Elektromotor gemäß Anspruch 1 sowie durch die weiteren vorteilhaften Ausführungsformen nach den Unteransprüchen.

Unter dem Begriff "Kraftbildung" wird hierbei die Drehmomentenbildung bei einem Rotationsmotor verstanden. Wird ein Leiter in Form einer Wicklung bestromt, bildet sich um diesen Leiter ein Magnetfeld und stößt beispielsweise einen gegenüberliegenden Permanentmagnet ab, es entsteht hierdurch eine Drehbewegung.

Unter einer eisenlosen Wicklung wird eine Wicklung verstanden, die zwischen den Leitern kein Eisenmaterial aufweist. Im Gegensatz hierzu weisen herkömmliche Motoren beispielsweise Nuten oder Polschuhe mit entsprechend integrierter Wicklung auf.

Vorteilhafterweise treten bei einem derartigen Elektromotor geringere Verluste als bei herkömmlichen Motoren auf, wodurch ein hoher Wirkungsgrad in Kombination mit einer hohen Leistungsdichte erreicht werden kann. Begründet sind die gering anfallenden Verluste durch einen relativ einfachen Motoraufbau, bei dem ein geringer Materialeinsatz von Leitermaterial und Motoreisen zugrunde liegt. Der Elektromotor ist durch eine kompakte Leichtbauweise gekennzeichnet, die insbesondere im Bereich von mobilen Antriebsanwendungen, z.B. Elektromobilität wünschenswert ist.

Die Wicklung des Motors befindet sich im Luftspalt zwischen einem Stator, der eine bevorzugt nutenlose Oberfläche aufweist, und einem Rotor für einen Rotationsmotor, der mit permanent- oder fremderregten Polen versehen ist. Im Falle eines rechteckigen Querschnitts oder kreisringsegmentförmigen Querschnitts der einzelnen Wicklungsstränge weisen die Wicklungsstränge eine kürzere Seite H und eine längere Seite B auf, die als Höhe und Breite aufzufassen sind.

Erfindungsgemäß wird ein möglichst kleiner Luftspalt zwischen dem Primär- und dem Sekundärteil angestrebt. Für den Querschnitt der Wicklungsstränge ist somit ein möglichst großes B/H-Verhältnis vorteilhaft, damit der magnetische Fluss, der auf einen Leiter wirkt, möglichst groß ist und somit eine relativ große Magnetkraft erzeugbar ist. Bevorzugt werden B/H-Verhältnisse zwischen 2 bis 100, besonders bevorzugt zwischen 4 bis 20. Jedoch sind sämtliche B/H-Kombinationen, soweit sie technisch realisierbar sind, möglich.

Die Wicklung ist nun so im Luftspalt angeordnet, dass die kürzere Seite H parallel zum Verlauf der magnetischen Feldlinien ausgerichtet ist. Dadurch wird erreicht, dass ein relativ geringer Luftspalt, trotz integrierter Wicklung realisiert werden kann und somit eine relativ hohe Kraftbildung möglich ist. Als Wicklungsmaterial kommen sämtliche Leiterwerkstoffe und Legierungen beispielsweise Kupfer, Aluminium, Gold, usw. in Frage.

Erfindungsgemäß ist das Primärteil des Elektromotors ein Stator, das Sekundärteil ist als ein Rotor ausgebildet, die Achse ist eine Rotationsachse und das Sekundärteil ist auf dem Primärteil parallel zu dieser Achse angeordnet. Die verwendeten Eisenmaterialien im Primär- und Sekundärteil können sämtliche Werkstoffe umfassen, die für den Motorenbau verwendet werden.

Nach einem Beispiel, welches nicht Teil der Erfindung ist, ist das Primärteil des Motors ein Stator und das Sekundärteil als ein Läufer ausgebildet, wobei die Achse eine Schubachse ist und wobei das Sekundärteil auf dem Primärteil senkrecht zur Achse angeordnet ist. Die Erfindung ist daher für einen rotatorisch arbeitenden Motor gültig, nicht jedoch für einen translatorisch arbeitenden Motor. Der physische Aufbau erfolgt bei beiden Varianten nach dem gleichen Prinzip der Luftspaltwicklung, wobei der wesentliche Unterschied in der Lagerung und in der Orientierung der Kraftentwicklung besteht.

Die magnetischen Pole des Elektromotors können permanent oder fremderregbar sein. Beide Varianten haben ihre Vor- und Nachteile. Permanent erregte Pole erreichen eine wesentlich höhere Flussdichte im Luftspalt als fremderregte Pole, benötigen keine äußere Energiezufuhr und sind relativ leicht in einen Rotor zu integrieren. Kompakte Permanentmagnete weisen ein relativ hohes Eigengewicht auf, sind aber dennoch im Vorteil bzgl. der Leistungsdichte, da Motoren kompakter ausgebildet werden können und Material an anderer Stelle eingespart werden kann.

Als permanentmagnetische Materialien können sämtliche verwendbare Magnetwerkstoffe wie z.B. NdFeB, SmCo, AlNiCo, SrFeBaFe, usw. verwendet werden. Elektromagnete sind im Vergleich zu den Permanentmagneten wesentlich günstiger, benötigen aber eine Spule, durch die ein zusätzlicher Strom fließen muss, der so mit einem Eisenkern ein Magnetfeld bildet.

Das Sekundärteil kann sowohl innerhalb als auch außerhalb des Primärteils angeordnet sein. Diese Flexibilität ermöglicht diverse Konstruktionsvarianten für die unterschiedlichsten Anwendungsgebiete. Insbesondere bei Direktantriebsstrategien weisen beispielsweise Außenläufermotoren ein erhebliches Potential auf, z.B. Radnabenmotor.

Der Elektromotor kann als ein Gleichstrommotor ausgebildet sein. Hierbei weist der Motor n Phasen je Pol auf, wobei n-1 Phasen gleichzeitig mit einer Gleichspannung ansteuerbar sind. Auch hierbei können die magnetischen Pole permanenterregt oder fremderregt werden und mit einer Gleichspannung, beispielsweise nach den gängigen Ansteuerverfahren, vorzugsweise in Form einer Block-Kommutierung, angesteuert werden.

In einer weiteren Ausführungsform der Erfindung kann der Elektromotor als Wechselstrommotor ausgestaltet sein, bei dem die einzelnen Phasen mit einer Wechselspannung ansteuerbar sind, die zueinander eine Phasenverschiebung <180° aufweisen. Hierbei können gängige Ansteuerverfahren, beispielsweise Sinus-Kommutierung, herangezogen werden.

Es werden mindestens zwei Phasen benötigt, die so angeordnet sind, dass sich unter jedem permanenterregten oder fremderregten magnetischen Pol jeweils ein Wicklungsstrang aller Phasen befindet. Je mehr Phasen verwendet werden, desto feiner sind die jeweiligen Wicklungsstränge ansteuerbar, wodurch eine Drehmomentwelligkeit verringert werden kann.

Der erfindungsgemäße Motor kann sowohl im motorischen Betrieb als auch im generatorischen Betrieb betrieben werden.

In einer weiteren Ausführungsform der Erfindung ist das Primärteil des Elektromotors als ein dünnwandiger Hohlzylinder, vorzugsweise mit einer nutenlosen Oberfläche ausgebildet. Das hat den Vorteil, dass ein geringer Materialeinsatz das Gesamtgewicht reduziert. Die Dicke des Hohlzylinders muss so dimensioniert sein, dass keine magnetische Sättigung des Eisenmaterials entsteht aufgrund der durchfluteten magnetischen Feldlinien. Die Verbindung zum Lager von diesem dünnwandigen Hohlzylinder kann durch verschiedene Materialkombinationen erfolgen, wobei die Festigkeit des Motors und die Wärmeabfuhr gewährleistet werden müssen.

Der Stator besteht aus Motoreisen und ist so gewählt, dass er eine genügende Festigkeit und eine entsprechende Permeabilität aufweist.

Die Wirbelstromverluste können mit den bereits bekannten Verfahren der Blechung eines Stators vermindert werden, wobei die sehr einfache Geometrie der flussführenden Teile des Stators einen sehr einfachen und kostengünstigen geblechten Aufbau ermöglichen.

Das Primärteil kann als Vollzylinder ausgebildet sein. Grenzen entstehen dabei durch die Machbarkeit der Fertigung insbesondere bei sehr kleinen Baureihen bietet sich die Ausbildung des Stators als Vollzylinder aus fertigungstechnischen Gründen an.

Das Primärteil kann zumindest ein Hohlzylindersegment aufweisen. Diese Ausbildung des Stators hat den Vorteil, dass nur ein Bruchteil von dem eines kompletten Stators benötigt wird. Weiterhin kann es aus Gründen wie Platzmangel, Gewichtsreduktion, usw. von Vorteil sein, den Stator nicht vollständig auszubilden, sondern als Zylindersegment oder als Hohlzylindersegment auszuführen.

Die elektrischen Verbindungselemente stellen die Verknüpfung zum n-ten Nachbarn, das heißt zum n-ten Wicklungsstrang, auf dem kürzesten Wege in räumlicher Anordnung dar, so dass alternierende Stromflüsse in den benachbarten Wicklungssträngen einer Phase realisiert werden können. Unter alternierende Stromflüsse wird verstanden, dass die Orientierung des Stroms zwischen den benachbarten Wicklungssträngen einer Phase, welche durch elektrische Verbindungselemente verbunden sind, wechselt. Dadurch können alle magnetischen Pole, unabhängig davon, ob sie permanenterregt oder fremderregt werden, gleichzeitig zur Kraftbildung bzw. zur Drehmomentbildung herangezogen werden. Im Gegensatz hierzu nutzen herkömmliche Elektromotoren zwar alle Pole, jedoch nutzen sie diese nicht gleichzeitig. Zudem werden durch die sehr kurzen Verbindungselemente ohmsche Verluste gering gehalten und somit der Wirkungsgrad des Motors erhöht.

Der magnetische Kreis ist charakterisiert durch jeweils einen dünnwandigen Eisenrückschluss im Primärteil und Sekundärteil, durch permanent oder fremderregte magnetische Pole, einem relativ geringen Luftspalt und einer Luftspaltwicklung mit geringer Windungszahl. Dieser magnetische Kreis weist eine relativ geringe magnetische Reluktanz auf und ist somit vorteilhaft für eine relativ große Krafterzeugung.

Die Drehzahl/Drehmoment-Kennlinie ist durch relativ einfache Parametervariationen, beispielsweise durch die Variation der Polpaarzahl, der Anzahl der Phasen und ähnlichem beeinflussbar. Damit lassen sich beliebige Betriebspunkte eines Motors auf relativ einfacher Weise festlegen.

Bei einer Gleichstromansteuerung des Elektromotors kann mit der n-1 Phase, d. h. mit der unbestromten Phase die Gegeninduktivität gemessen werden und diese für eine Positionsbestimmung des Rotorwinkels verwendet werden. Die jeweils stromlose Phase kann durch Messung der induzierten Spannung als Positionssensor genutzt werden. Der Sensor kann sowohl digital zum Erkennen des Umpolarisierungspunktes zwischen zwei benachbarten Polen als auch analog durch Auswertung der elektromotorischen Kraft (EMK) und Rückrechnung auf die Rotorposition ausgeführt werden. Somit wäre eine sensorlose Drehzahl-, Drehmoment-, Strom-, oder Lagereglung möglich.

Durch die gleichzeitige permanente Drehmomenterzeugung an allen Polen kann beim Betrieb des erfindungsgemäßen Elektromotors eine relativ geringe Drehmomentwelligkeit erreicht werden.

Erfindungsgemäß stehen die elektrischen Verbindungselemente derart in Verbindung mit den Wicklungssträngen, dass die Verbindungselemente wechselseitig an den ersten und zweiten Enden der Wicklungsstränge angeordnet sind. Vorzugsweise sind die Wicklungsstränge mit den Verbindungselementen mäanderförmig angeordnet.

Die elektrischen Verbindungselemente stehen derart mit den Wicklungssträngen in Verbindung, dass die elektrischen Verbindungselemente nicht auf der Ebene der jeweiligen Wicklungsstränge, sondern auf radial verschiedenen Ebenen angeordnet sind.

Es hat sich als vorteilhaft erwiesen, wenn der Elektromotor einen Wicklungsstrang umfasst, der einen Querschnitt aufweist, der als ein Rechteck oder Kreisringsegment ausgebildet ist. Vorzugsweise ist die Höhe H des Querschnittes kleiner ist als dessen Breite B, wobei der Querschnitt in mehrere Abschnitte unterteilt sein kann.

Für einen Rotationsmotor sind die Wicklungsstränge des Elektromotors parallel zur Rotationsachse ausgerichtet.

Für einen Linearmotor , welcher nicht Teil der Erfindung ist, sind die Wicklungsstränge des Elektromotos senkrecht zur Schubachse ausgerichtet.

Die elektrischen Verbindungselemente werden zusätzlich zur Befestigung der Wicklung genutzt. Erfindungsgemäß ist vorgesehen, dass die Wicklungsstränge mittels der elektrischen Verbindungselemente auf dem Primärteil befestigt sind.

Erfindungsgemäß sind die Wicklungsstränge zusammen mit den elektrischen Verbindungselementen einteilig ausgebildet.

Das Gesamtgewicht dieses Elektromotors mit einem dünnwandigen Stator und einer Luftspaltwicklung ist relativ gering im Vergleich zu herkömmlichen Motoren, da herkömmliche Motoren sehr massive Statoren aufweisen, die mit entsprechenden Wicklungsnuten oder Polschuhen versehen sind.

Die Wicklungsstränge und die elektrischen Verbindungselemente des erfindungsgemäßen Motors können in Abhängigkeit von den gewählten Materialien oder Materialkombinationen durch folgende Verfahren allein oder in Kombination hergestellt werden:
- Trennverfahren, beispielsweise Laserschneiden, Wasserstrahlschneiden, Stanzen und ähnliches,
- Umformverfahren, beispielsweise Biegen, Pressen, Gießen, Tiefziehen, Drehen, Schleifen usw.,
- Fügeverfahren, beispielsweise Schweißen, Kleben, Löten, usw.

Zudem können die Wicklungsstränge und die Verbindungselemente Beschichtungen aufweisen, die beispielsweise die Leitfähigkeit erhöhen und die beispielsweise durch Besprühen, Tauchen, Sputtern und ähnliche Beschichtungsverfahren aufgebracht werden können.

Der elektrische Widerstand des erfindungsgemäßen Elektromotors ist relativ gering, da die Luftspaltwicklung relativ große Querschnitte aufweist und insgesamt relativ wenig Wicklungsmaterial benötigt wird. Weiterhin werden relativ kurze elektrische Verbindungsleiter zwischen den einzelnen Strängen der Phasen verwendet. Aufgrund des dünnwandigen Zylinderrings des Stators fallen die Ummagnetisierungsverluste geringer aus als bei herkömmlichen Motoren, da weniger Eisenmaterial zur Herstellung des Zylinderrings erforderlich ist.

Der erfindungsgemäße Elektromotor, der durch relativ kurze Wicklungsverbindungen, beispielsweise in mäanderform und durch einen relativ geringen verbleibenden Luftspalt gekennzeichnet ist, weist relativ geringe Hystereseverluste, Wirbelstromverluste und ohmsche Verluste auf.

Zudem zeichnet er sich durch ein sehr geringes Gewicht bei einer relativ hohen Leistungsdichte aus und ist sehr einfach herstellbar, wobei die Dimensionen des Primärteils, des Sekundärteils, der Wicklungseinrichtung und der magnetischen Pole in einfacher Weise veränderbar sind.

Der vorgeschlagene Elektromotor ist in sämtlichen Anwendungsbereichen derzeitiger Elektromotoren einsetzbar und kann zusätzlich in neuen Anwendungsgebieten wie z.B. auf dem Gebiet der Elektromobilität eingesetzt werden, wobei die Erfindung nicht auf die aufgezeigten Verwendungsmöglichkeiten und Materialien sowie Kombinationen dieser beschränkt ist.

Ausführungsformen der Erfindung werden mit Hilfe der nachfolgenden Figuren näher beschrieben.

Es zeigen:
Fig. 1a: schematisch den Aufbau eines Elektromotors mit einem Außenläufer (z.B.
Dreiphasen-Wicklung U, V, W),
Fig. 1b: schematisch den Aufbau eines Elektromotors mit einem Innenläufer (z.B.
Dreiphasen-Wicklung U, V, W),
Fig. 1c: schematisch den Aufbau eines Linearmotors,
Fig. 1d: schematisch den Aufbau eines Hohlzylindersegments
Fig. 2: schematisch den Aufbau einer Wicklungsphase,
Fig. 3a und 3b: schematische Querschnitte der Wicklungsstränge und
Fig. 3c: schematisch den Verlauf der magnetischen Feldlinien für einen Linearmotor.
Fig. 4: Ausschnitt der magnetischen Feldverteilung bei einem Motor mit permanenterregten Polen

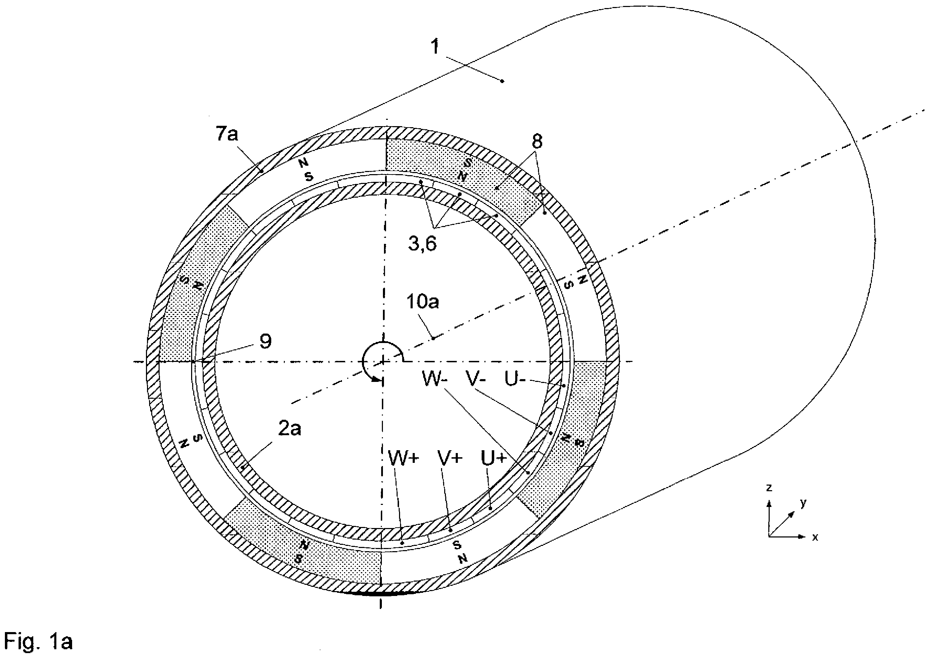

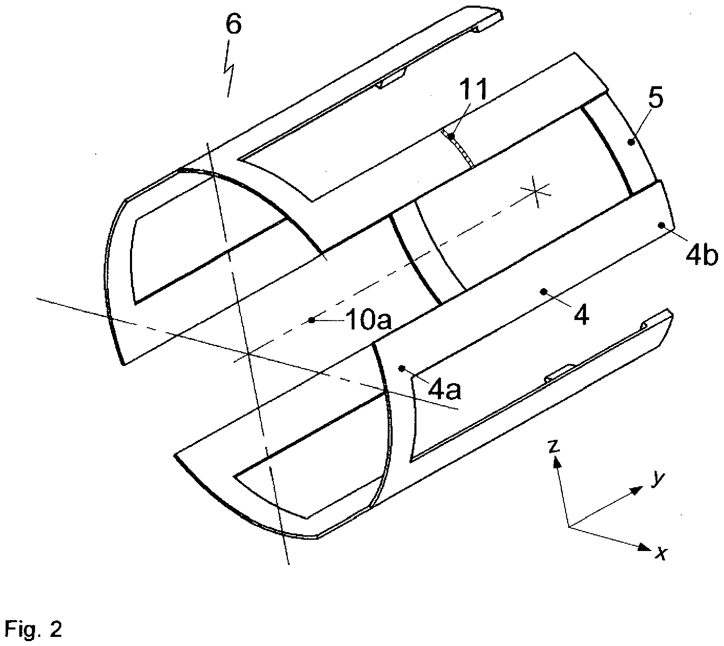

Fig. 1a zeigt schematisch den Aufbau eines Elektromotors 1 mit einem Außenläufer, d.h. das Primärteil 2a und die Wicklungseinrichtung 3 befinden sich innerhalb des Sekundärteils 7a mit den magnetischen Polen 8. Die Wicklungseinrichtung 3 setzt sich hierbei aus drei Phasen 6, auch mit den Buchstaben "U", "V" und "W" gekennzeichnet, zusammen, wobei eine Phase aus mehreren Wicklungssträngen 4 und elektrischen Verbindungselementen 5 besteht, die in Fig. 1a nicht dargestellt sind und der Figur 2 zu entnehmen sind, wobei sich zumindest ein Wicklungsstrang 4 einer Phase 6 unter einem magnetischen Pol 8 im Luftspalt 9 befindet und zwar so, dass die Wicklungsstränge 4 parallel zur Rotationsachse 10a ausgerichtet sind, woraus folgt dass permanent sämtliche magnetischen Pole 8 zur Drehmomentbildung verwendet werden können. Die Polarisierung der magnetischen Pole 8 erfolgt radial zur Rotationsachse 10a und wechselt jeweils zwischen den benachbarten magnetischen Polen 8 in alternierender Form. Das Primärteil 2a und das Sekundärteil 7a sind auf einer gemeinsamen Rotationsachse 10a gelagert.

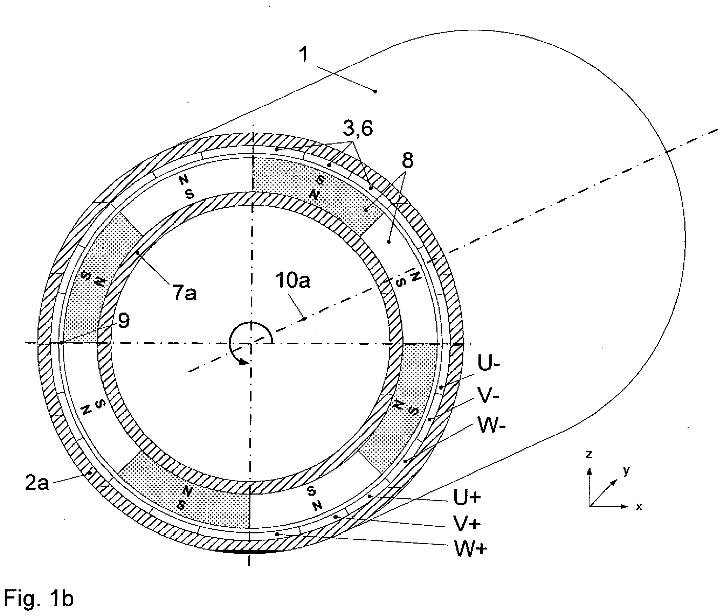

Fig. 1b zeigt schematisch den Aufbau eines Elektromotors 1 mit einem Innenläufer, d.h. das Primärteil 2a und die Wicklungseinrichtung 3 befinden sich außerhalb des Sekundärteils 7a mit den magnetischen Polen 8. Die Wicklungseinrichtung 3 setzt sich hierbei aus drei Phasen 6, auch mit den Buchstaben "U", "V" und "W" gekennzeichnet, zusammen, wobei eine Phase aus mehreren Wicklungssträngen 4 und elektrischen Verbindungselementen 5 besteht, die in Fig. 1b nicht dargestellt sind und der Figur 2 zu entnehmen sind, wobei sich zumindest ein Wicklungsstrang 4 einer Phase 6 unter einem magnetischen Pol 8 im Luftspalt 9 befindet und zwar so, dass die Wicklungsstränge 4 parallel zur Rotationsachse 10a ausgerichtet sind, woraus folgt dass permanent sämtliche magnetischen Pole 8 zur Drehmomentbildung verwendet werden können. Die Polarisierung der magnetischen Pole 8 erfolgt radial zur Rotationsachse 10a und wechselt jeweils zwischen den benachbarten magnetischen Polen 8 in alternierender Form. Das Primärteil 2a und das Sekundärteil 7a sind auf einer gemeinsamen Rotationsachse 10a gelagert.

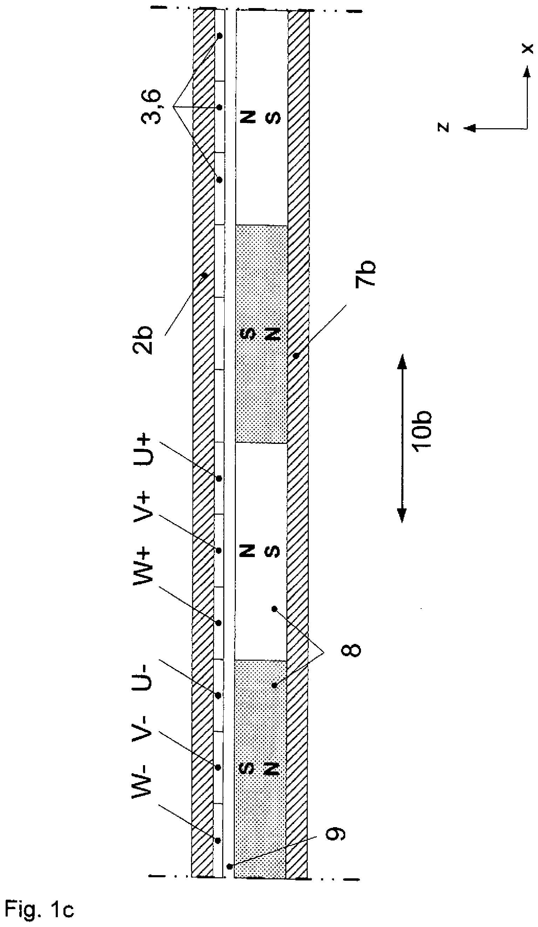

Fig. 1c zeigt schematisch den Aufbau eines Linearmotors 1, d.h. das Primärteil 2b und die Wicklungseinrichtung 3 befinden sich gegenüber dem Sekundärteil 7b mit den magnetischen Polen 8, wobei das Sekundärteil 2b ein Läufer ist und kein Rotor wie beim Rotationsmotor in Fig. 1a, 1b. Die Polarisierung der magnetischen Pole 8 erfolgt radial zum Luftspalt 9 und wechselt jeweils zwischen den benachbarten magnetischen Polen 8 in alternierender Form. Die Wicklungseinrichtung 3 besteht in dieser Ausführung aus drei Phasen U, V und W, wobei sich jeweils ein Wicklungsstrang 4 einer Phase 6 unter einem magnetischen Pol 8 im Luftspalt 9 befindet und zwar so, dass die Wicklungsstränge 4 senkrecht zur Schubachse 10b ausgerichtet sind, woraus folgt, dass permanent sämtliche magnetischen Pole 8 zur Drehmomentbildung verwendet werden können. Das Primärteil 2b und das Sekundärteil 7b sind auf einer gemeinsamen Schubachse 10b gelagert.

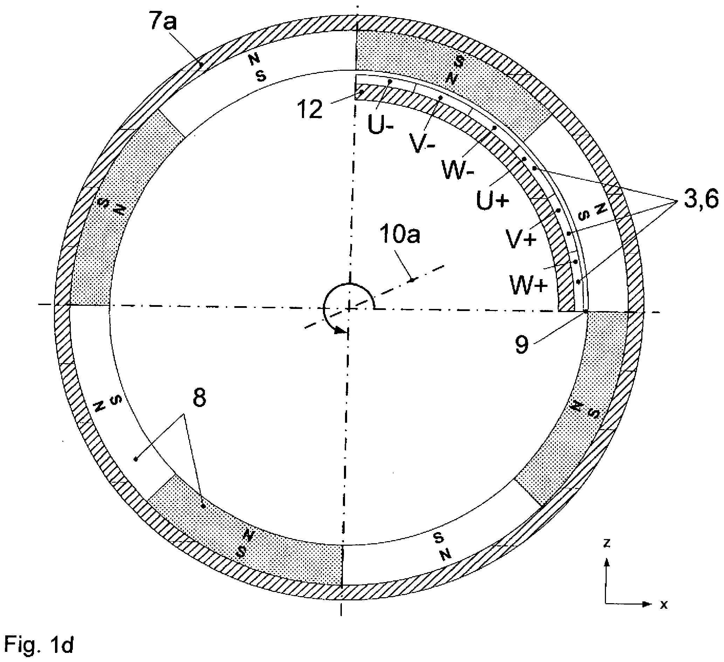

Fig. 1d zeigt schematisch den Aufbau eines Elektromotors 1 mit einem Hohlzylindersegment 12 für ein Primärteil 2a (nicht dargestellt) für einen Außenläufermotor, d.h. das Primärteil 2a und die Wicklungseinrichtung 3 befinden sich innerhalb des Sekundärteils 7a mit den magnetischen Polen 8, wobei das Primärteil 2a kein vollständiger Hohlzylinder ist, sondern nur über mindestens zwei magnetische Pole 8 als Hohlzylindersegment 12 ausgebildet sein kann. Die Polarisierung der magnetischen Pole 8 erfolgt radial zur Rotationsachse 10a und wechselt jeweils zwischen den benachbarten magnetischen Polen 8 in alternierender Form. Die Wicklungseinrichtung 3 besteht in dieser Ausführung aus drei Phasen U, V und W, wobei sich jeweils ein Wicklungsstrang 4 (nicht dargestellt) einer Phase 6 unter einem magnetischen Pol 8 im Luftspalt 9 und zwar nur auf dem Hohlzylindersegment 12 befindet und zwar so, dass die Wicklungsstränge 4 parallel zur Rotationsachse 10a ausgerichtet sind, woraus folgt, dass permanent sämtliche magnetischen Pole 8 zur Drehmomentbildung verwendet werden können. Das Primärteil 2a und das Sekundärteil 7a sind auf einer gemeinsamen Rotationsachse 10a gelagert.

Fig. 2 zeigt schematisch ein Beispiel für eine Phase 6 der Wicklungseinrichtung 3 (hier in Figur 2 nicht dargestellt), für einen Außenläufermotor bzw. Innenläufermotor gemäß Figuren 1a oder 1b. Hierbei ist zu sehen, dass die Wicklungsstränge 4 parallel zur Rotationsachse 10a verlaufen. Der Querschnitt 11 der Wicklungsstränge 4 ist als Kreisringsegment ausgebildet und besteht aus Vollmaterial. Die elektrischen Verbindungselemente 5 können in Verlängerung zu den Wicklungssträngen 4 ausgebildet sein - dies ist jedoch nicht Teil der Erfindung - oder erfindungsgemäß in radialer Richtung bezogen auf die Rotationsachse 10a angebracht werden. Die Verbindung zwischen den elektrischen Verbindungselementen 5 und den Wicklungssträngen 4 kann mit sämtlichen Fügetechniken erfolgen - dies ist jedoch nicht Teil der Erfindung. Erfindungsgemäß wird die gesamte Phase 6 aus einem Stück gefertigt, d.h. Wicklungsstränge 4 und elektrische Verbindungselemente 5 bestehen aus einem zusammenhängenden Leitermaterial, welches dann in die gewünschte Form gebogen wird.

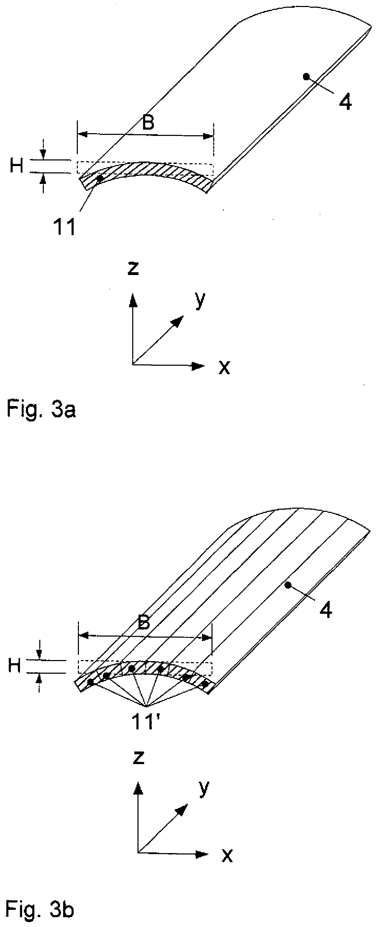

Fig. 3a - welche nicht Teil der Erfindung darstellt - schematisch einen aus Vollmaterial bestehenden Querschnitt 11 eines Wicklungsstranges 4, wobei der Querschnitt 11 als ein Kreisringsegment ausgebildet ist. Hierbei ist die Höhe H um ein Vielfaches geringer als die Breite B.

Fig. 3b stellt schematisch einen aus mehreren Abschnitten 11' zusammengesetzten Querschnitt 11 eines Wicklungsstrangs 4 mit einer Höhe H und einer Breite B dar.

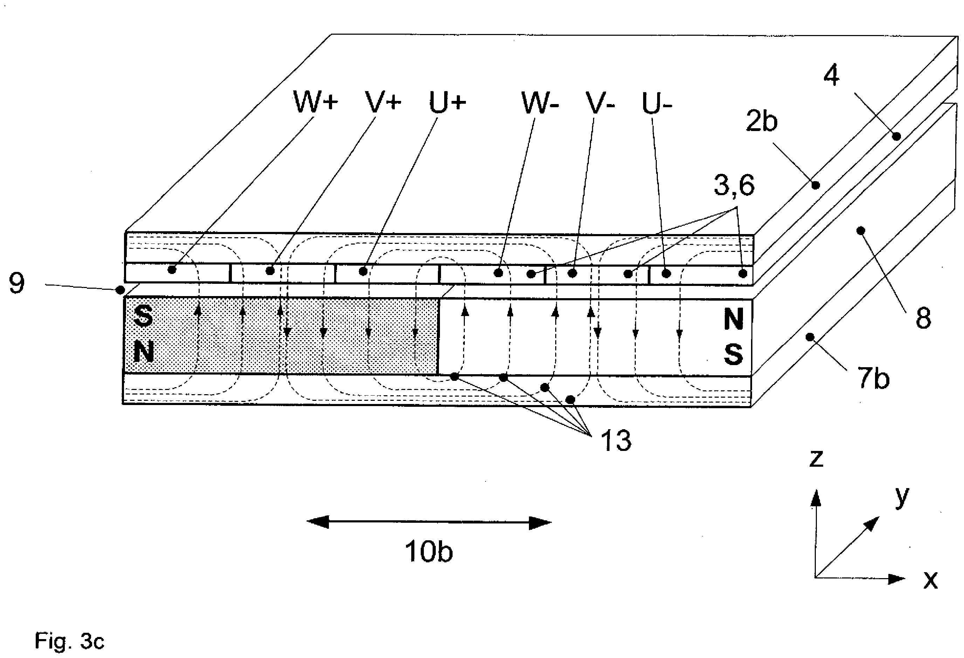

Fig. 3c zeigt schematisch den Verlauf der magnetischen Feldlinien 13 für einen Linearmotor 1 - welcher nicht Teil der Erfindung ist - mit einem Läufer 7b mit magnetischen Polen 8, einem Stator 2b, Wicklungseinrichtungen 3, die in einem Luftspalt 9 zwischen dem Stator 2b und dem Läufer 7b auf dem Stator 2b relativ zu einer Schubachse 10b angeordnet sind.

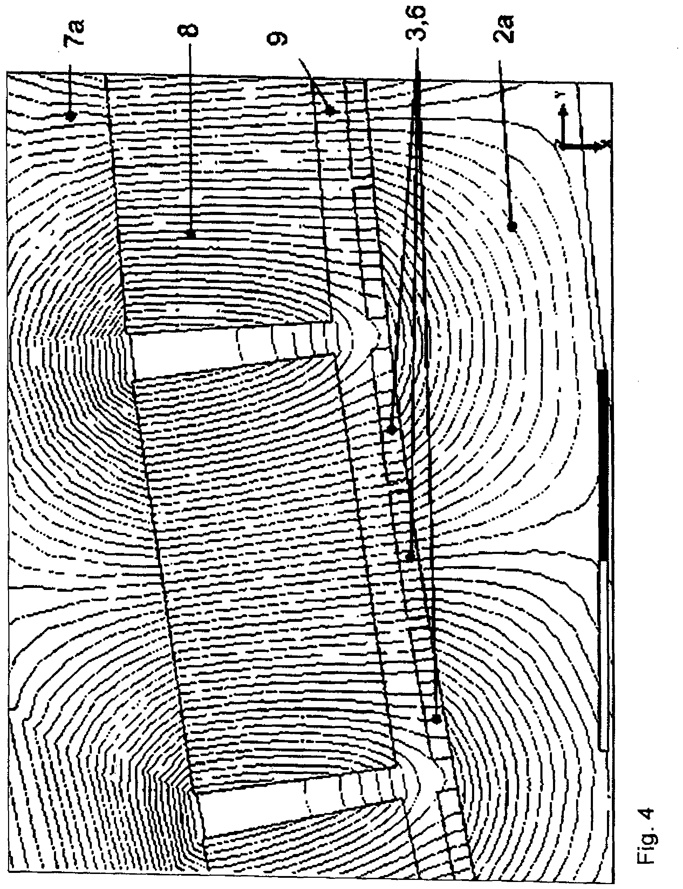

Fig. 4 zeigt einen Ausschnitt der magnetischen Feldverteilung bei einem Motor mit permanenterregten Polen 8, wobei insbesondere gezeigt ist, dass sich die magnetischer Kreise jeweils über benachbarte Magnete schließen und daher im Vergleich zu herkömmlichen Motoren erheblich verkürzt sind. Durch den reduzierten Widerstand infolge der kurzen Wege des magnetischen Flusses ist die magnetische Flussdichte im Luftspalt groß im Vergleich zur Remanenzflussdichte der Permanentmagnete. Hinzu kommt, dass das magnetische Streufeld klein gehalten wird.

### Bezugszeichenliste:

- 1: Elektromotor
- 2: Primärteil
- 2a: Stator Rotationsmotor
- 2b: Stator Linearmotor
- 3: Wicklungseinrichtung
- 4: Wicklungsstrang
- 4a: erstes Ende eines Wicklungsstranges
- 4b: dem ersten Ende 4a gegenüberliegende Ende eines Wicklungsstranges
- 5: elektrisches Verbindungselement
- 6: Phase
- 7: Sekundärteil
- 7a: Rotor
- 7b: Läufer
- 8: magnetischer Pol
- 9: Luftspalt
- 10: Achse
- 10a: Rotationsachse
- 10b: Schubachse
- 11: Querschnitt der Wicklungsstränge bestehend aus einem Leiter
- 11': Querschnitt der Wicklungsstränge bestehend aus mehreren Leitern
- 12: Hohlzylindersegment
- 13: Verlauf der magnetischen Feldlinien

## Patentansprüche

1. Elektromotor (1), zumindest umfassend:
- ein Primärteil (2a), welches als Stator ausgebildet ist, umfassend einen Eisenrückschluss ausbildende Eisenmaterialien, mit einer eisenlosen Wicklungseinrichtung (3), die zumindest zwei Phasen (6) umfasst, wobei eine Phase (6) zumindest zwei Wicklungsstränge (4) mit ersten (4a) und zweiten Enden (4b) und zumindest ein elektrisches Verbindungselement (5) umfasst,
- ein Sekundärteil (7a), umfassend einen Eisenrückschluss ausbildende Eisenmaterialien, mit einer geraden Anzahl an magnetischen Polen (8), die alternierend auf dem Sekundärteil (7a) angeordnet sind, wobei
o die Wicklungseinrichtung (3) in einem Luftspalt (9) zwischen dem Primärteil (2a) und dem Sekundärteil (7a) auf dem Primärteil (2a) relativ zu einer Rotationsachse (10a) angeordnet ist, derart, dass
■ die jeweiligen Wicklungsstränge (4) einer Phase (6) gegenüber je einem magnetischen Pol (8) angeordnet sind und sich gegenüber jedem magnetischen Pol (8) jeweils ein Wicklungsstrang (4) aller Phasen (6) befindet, wobei die Wicklungsstränge (4) parallel zur Rotationsachse (10a) ausgerichtet sind, und wobei die elektrischen Verbindungselemente (5) derart in Verbindung mit den Wicklungssträngen (4) stehen, dass sie wechselseitig an deren ersten Enden (4a) und zweiten Enden(4b) angeordnet sind, so dass alternierende Stromflüsse in den benachbarten Wicklungssträngen (4) einer Phase (6) realisiert werden können, woraus folgt, dass
■ alle magnetischen Pole (8) gleichzeitig zur Kraftbildung heranziehbar sind,
wobei die elektrischen Verbindungselemente (5) derart in Verbindung mit den Wicklungssträngen (4) stehen, dass die elektrischen Verbindungselemente (5) nicht auf der Ebene der jeweiligen Wicklungsstränge (4), sondern auf radial verschiedenen Ebenen angeordnet sind, wobei die jeweiligen Wicklungsstränge (4) und die elektrischen Verbindungselemente (5) aus einem zusammenhängenden Leitermaterial bestehen, welches in die gewünschte Form gebogen ist, und dass die Wicklungsstränge (4) mittels der elektrischen Verbindungselemente (5) auf dem Primärteil (2a) befestigt sind.

2. Elektromotor (1) nach Anspruch 1, **dadurch gekennzeichnet, dass** das Sekundärteil als ein Rotor (7a) ausgebildet ist, die Achse (10a) eine Rotationsachse ist und wobei das Sekundärteil (7a) und das Primärteil (2a) auf der gemeinsamen Rotationsachse (10a) angeordnet sind.

3. Elektromotor nach Anspruch 1, **dadurch gekennzeichnet, dass** die magnetischen Pole (8) permanent oder fremderregbar sind.

4. Elektromotor nach einem der Ansprüche 1 bis 3, **dadurch gekennzeichnet, dass** das Sekundärteil (7a) innerhalb oder außerhalb des Primärteils (2a) angeordnet ist.

5. Elektromotor nach einem der Ansprüche 1 bis 4, **dadurch gekennzeichnet, dass** dieser als Gleichstrommotor ausgebildet ist und n Phasen (6) je Pol (8) aufweist, wobei n-1 Phasen gleichzeitig mit einer Gleichspannung ansteuerbar sind.

6. Elektromotor nach einem der Ansprüche 1 bis 5, **dadurch gekennzeichnet, dass** dieser als Wechselstrommotor ausgebildet ist, bei dem die einzelnen Phasen (6) mit einer Wechselspannung ansteuerbar sind, die zueinander eine Phasenverschiebung <180° aufweisen.

7. Elektromotor nach einem der Ansprüche 1 bis 6, **dadurch gekennzeichnet, dass** das Primärteil (2a) als Vollzylinder ausgebildet ist.

8. Elektromotor nach einem der Ansprüche 1 bis 7, **dadurch gekennzeichnet, dass** die elektrischen Verbindungselemente (5) mit den Wicklungssträngen (4) mäanderförmig angeordnet sind.

## Claims

1. Electric motor, at least comprising
- a primary part (2a), which is in the form of a stator, comprising iron materials which form a magnetic yoke, having a coreless winding device (3) which comprises at least two phases (6), wherein one phase (6) comprises at least two winding sections (4) with first ends (4a) and second ends (4b), and at least one electrical connecting element (5),
- a secondary part (7a) comprising iron materials which form a magnetic yoke, having an even number of magnetic poles (8) which are arranged alternately on the secondary part (7a), wherein
∘ the winding device (3) is arranged on the primary part (2a) relative to a rotation axis (10a) in an air gap (9) between the primary part (2a) and the secondary part (7a) in such a way that
• the winding sections (4) of a phase (6) are each arranged opposite a respective magnetic pole (8) and a respective winding section (4) of all phases (6) is located opposite each magnetic pole (8), wherein the winding sections (4) are oriented parallel to the rotation axis (10a), and wherein the electrical connecting elements (5) are connected to the winding sections (4) in such a way that they are arranged alternately at the first ends (4a) and second ends (4b) of the said winding sections, so that alternating current flows can be implemented in the adjacent winding sections (4) of a phase (6), as a result of which
• all magnetic poles (8) can be used simultaneously for forming a force,
wherein the electrical connecting elements (5) are connected to the winding sections (4) in such a way that the electrical connecting elements (5) are not arranged on the plane of the respective winding sections (4), but rather on radially different planes, wherein the respective winding sections (4) and the electrical connecting elements (5) consist of a coherent conductor material which is bent into the desired shape, and that the winding sections (4) are secured on the primary part (2a) by means of the electrical connecting elements (5).

2. Electric motor (1) according to Claim 1, **characterized in that** the secondary part is in the form of a rotor (7a), the axis (10a) is a rotation axis, and wherein the secondary part (7a) and the primary part (2a) are arranged on the common rotation axis (10a).

3. Electric motor according to Claim 1, **characterized in that** the magnetic poles (8) are permanently or externally excited.

4. Electric motor according to one of Claims 1 to 3, **characterized in that** the secondary part (7a) is arranged inside or outside the primary part (2a).

5. Electric motor according to one of Claims 1 to 4, **characterized in that** it is in the form of a DC motor and has n phases (6) per pole (8), wherein n-1 phases can be driven simultaneously with a DC voltage.

6. Electric motor according to one of Claims 1 to 5, **characterized in that** it is in the form of an AC motor, in which the individual phases (6) can be driven with an AC voltage having a phase shift of <180° with respect to one another.

7. Electric motor according to one of Claims 1 to 6, **characterized in that** the primary part (2a) is in the form of a solid cylinder.

8. Electric motor according to one of Claims 1 to 7, **characterized in that** the electrical connecting elements (5) with the winding sections (4) are arranged in a meandering manner.

## Revendications

1. Moteur électrique (1), comprenant au moins :
- une partie primaire (2a) qui est conçue comme un stator comprenant des matières à base de fer formant un retour en fer, ladite partie primaire comprenant un moyen d'enroulement sans fer (3) qui comprend au moins deux phases (6), une phase (6) comprenant au moins deux brins d'enroulement (4), pourvus de première (4a) et deuxième extrémités (4b), et au moins un élément de liaison électrique (5) ,
- une partie secondaire (7a) comprenant des matières à base de fer formant un retour en fer, ladite partie secondaire comprenant un nombre pair de pôles magnétiques (8) qui sont disposés alternativement sur la partie secondaire (7a),
o le moyen d'enroulement (3) étant disposé sur la partie primaire (2a) par rapport à un axe de rotation (10a) dans un entrefer (9) ménagé entre la partie primaire (2a) et la partie secondaire (7a) de sorte que
■ les brins d'enroulement respectifs (4) d'une phase (6) sont disposés chacun en face d'un pôle magnétique (8) et un brin d'enroulement (4) de toutes les phases (6) étant situé en face de chaque pôle magnétique (8), les brins d'enroulement (4) étant orientés parallèlement à l'axe de rotation (10a), et les éléments de liaison électrique (5) étant reliés aux brins d'enroulement (4) de manière à ce qu'ils soient disposés alternativement à leurs premières extrémités (4a) et deuxièmes extrémités (4b) de façon à pouvoir générer un courant alternatif dans les brins d'enroulements (4) adjacents d'une phase (6), d'où il résulte que
■ tous les pôles magnétiques (8) peuvent être utilisés simultanément pour générer une force,
les éléments de liaison électrique (5) étant reliés aux brins d'enroulement (4) de manière à ce que les éléments de liaison électrique (5) sont disposés non pas au niveau des brins d'enroulement (4) respectifs mais à des niveaux radialement différents,
les brins d'enroulement (4) respectifs et les éléments de liaison électrique (5) étant en une matière conductrice continue qui est pliée dans la forme souhaitée, et les brins d'enroulement (4) étant fixés à la partie primaire (2a) au moyen des éléments de liaison électrique (5).

2. Moteur électrique (1) selon la revendication 1, **caractérisé en ce que** la partie secondaire est conçue comme un rotor (7a), l'axe (10a) est un axe de rotation et la partie secondaire (7a) et la partie primaire (2a) étant disposées sur l'axe de rotation commun (10a).

3. Moteur électrique selon la revendication 1, **caractérisé en ce que** les pôles magnétiques (8) sont excitables en permanence ou extérieurement.

4. Moteur électrique selon l'une des revendications 1 à 3, **caractérisé en ce que**
la partie secondaire (7a) est disposée à l'intérieur ou à l'extérieur de la partie primaire (2a).

5. Moteur électrique selon l'une des revendications 1 à 4, **caractérisé en ce que**
celui-ci est conçu comme un moteur à courant continu et comporte n phases (6) par pôle (8), n-1 phases pouvant être commandées simultanément avec une tension continue.

6. Moteur électrique selon l'une des revendications 1 à 5, **caractérisé en ce que**
celui-ci est conçu comme un moteur à courant alternatif dans lequel les différentes phases (6) peuvent être commandées avec une tension alternative, lesquelles tensions alternatives présentent un déphasage de < 180° les unes par rapport aux autres.

7. Moteur électrique selon l'une des revendications 1 à 6, **caractérisé en ce que**
la partie primaire (2a) est conçue comme un cylindre plein.

8. Moteur électrique selon l'une des revendications 1 à 7, **caractérisé en ce que**
les éléments de liaison électrique (5) pourvus des brins d'enroulement (4) sont disposés en méandres.
